# EUROPÄISCHE PATENTSCHRIFT

(11) **EP 3 241 701 B1**
(45) Veröffentlichungstag und Bekanntmachung des Hinweises auf die Patenterteilung: **15.12.2021**
(21) Anmeldenummer: 17157446.0
(22) Anmeldetag: 22.02.2017
(51) Int. Cl.: B60K 6/48, B60K 6/40, B60K 6/36, B60K 6/547, B60K 6/387, F16H 3/089

(54) **HYBRIDANTRIEBSSTRANG**
HYBRID TRACTION CHAIN
GROUPE MOTOPROPULSEUR HYBRIDE

(30) Priorität: 02.05.2016 DE 102016108124
(43) Veröffentlichungstag der Anmeldung: 08.11.2017
(73) Patentinhaber: Magna PT B.V. & Co. KG, 74199 Untergruppenbach (DE)
(72) Erfinder: Schaller, Martin, 64732 Bad König (DE)
(74) Vertreter: Rausch, Gabriele

(56) Entgegenhaltungen:
- EP-A2- 1 205 330
- EP-A2- 2 530 356
- DE-A1-102010 030 573
- DE-A1-102011 005 561
- JP-A- 2014 097 688

## Beschreibung

Die vorliegende Erfindung betrifft einen Hybridantriebsstrang für ein Kraftfahrzeug, mit einer ersten Antriebseinheit zur Bereitstellung einer ersten Antriebsleistung zum Antreiben des Kraftfahrzeuges und mit einer zweiten Antriebseinheit zur Bereitstellung einer zweiten Antriebsleistung zum Antreiben des Kraftfahrzeuges, und mit einer Getriebeanordnung, die mit der ersten Antriebseinheit und mit der zweiten Antriebseinheit verbunden ist, um Antriebsleistung zu einem Getriebeausgang in unterschiedlichen Übersetzungen zu führen.

Auf dem Gebiet der Hybridantriebsstränge sind unterschiedliche Konzepte bekannt.

Eine Version eines Hybridantriebsstranges beinhaltet zwei Antriebseinheiten, beispielsweise in Form eines Verbrennungsmotors und einer elektrischen Maschine, die parallel an einem Getriebeeingang angeschlossen sind. Hierbei können die Antriebsleistungen von erster und zweiter Antriebseinheit auf einem identischen Leistungsübertragungspfad überlagert werden, beispielsweise um einen Boost-Betrieb einzurichten, um ein Anfahren zu unterstützen, etc. Wenn die Antriebseinheiten über eine Trennkupplung mit dem Getriebeeingang verbunden sind, sind auch Funktionalitäten wie ein Laden eines elektrischen Energiespeichers im Fahrzeugstillstand (Standladen) möglich.

Bei den oben genannten einfachen Hybridantriebssträngen ist eine rein elektrische Fahrweise in der Regel nur dann möglich, wenn zwischen der ersten und der zweiten Antriebseinheit eine weitere Trennkupplung vorgesehen ist. All dies führt zu einer relativ kostenintensiven und bauraumintensiven Konstruktion.

Bei Doppelkupplungsgetrieben ist es bekannt, eine elektrische Maschine an eines der zwei Teilgetriebe anzubinden, und zwar in Leistungsflussrichtung gesehen hinter den eingangsseitigen Reibkupplungen (Doppelkupplung). Bei dieser Ausführungsform ist ein rein elektrischer Fahrbetrieb über eines der Teilgetriebe möglich. Ferner kann Leistung über das der elektrischen Maschine zugeordnete Teilgetriebe von der ersten Antriebseinheit (Verbrennungsmotor) übertragen werden, derart, dass die Leistung von erster und zweiter Antriebseinheit sich auf dem gleichen Leistungsübertragungspfad überlagern lassen.

Bei derartigen Getrieben ist jedoch auch eine sog. Torque-Split-Betriebsweise möglich. Hierbei wird Leistung über unterschiedliche Leistungsübertragungspfade auf den Getriebeausgang geführt. Beispielsweise wird elektrische Leistung über das eine Teilgetriebe auf den Getriebeausgang geführt, und verbrennungsmotorische Leistung wird über das andere Teilgetriebe auf den Getriebeausgang geführt, so dass sich die Antriebsleistungen am Getriebeausgang aufsummieren. Dies ermöglicht eine Vielzahl weiterer Betriebsarten, einschließlich einer Zugkraftunterstützung über die elektrische Maschine bei Gangwechseln, einen Segel-Modus, bei dem der elektrische Motor abgeschaltet wird und die elektrische Maschine bedarfsweise Leistung zuführt, um eine bestimmte Geschwindigkeit zu halten, etc.

Ein Standladen ist bei derartigen Hybridantriebssträngen in Doppelkupplungsgetrieben jedoch nur dann möglich, wenn die elektrische Maschine im Bereich eines Getriebeeingang an das jeweilige Teilgetriebe angekoppelt ist.

Generell können Hybridantriebsstränge so ausgelegt sein, dass Antriebsleistung überwiegend von der ersten Antriebseinheit in Form eines Verbrennungsmotors bereitgestellt wird, wobei die zweite Antriebseinheit in Form einer elektrischen Maschine lediglich zur Unterstützung verwendet wird, oder für sehr kurze Fahrstrecken. Andere Hybridantriebsstränge sind so ausgebildet, dass die Leistung von Verbrennungsmotor und elektrischer Maschine in der gleichen Größenordnung liegen kann. Dies hängt maßgeblich auch davon ab, wie groß die Batterie ist, die in den Antriebsstrang integriert wird.

Ergänzend hierzu sind sog. Range-Extender-Antriebsstränge zu erwähnen, bei denen häufig zwei elektrische Maschinen vorhanden sind, von denen die eine zum Antrieb genutzt wird und von denen die andere zum Laden des elektrischen Energiespeichers verwendet wird.

Generell benötigt ein Fahrbetrieb mit einem Verbrennungsmotor eine relativ große Anzahl von Gangstufen (Übersetzungsverhältnissen), um den Verbrennungsmotor jeweils in einem günstigen Drehzahlband nutzen zu können. Eine elektrische Maschine benötigt in der Regel deutlich weniger Gangstufen.

Manche Hybridantriebsstränge besitzen für den Antrieb mittels Verbrennungsmotor keine eigene Rückwärtsgangstufe, um Gewicht einzusparen. Ein Rückwärtsfahren ist bei derartigen Antriebssträngen ausschließlich mittels des elektrischen Motors möglich, dessen Drehrichtung dann zum Rückwärtsfahren umgekehrt wird.

Generell besteht ein Bedarf nach Hybridantriebssträngen, die einfach und kostengünstig realisierbar sind, und bei denen ein möglichst großer Funktionalitätsumfang gewährleistet ist.

Aus dem Dokument WO 2013/060955 A1 ist ein Hybridantriebsstrang bekannt, bei dem ein Verbrennungsmotor direkt, d.h. ohne Trennkupplung mit einer ersten Eingangswelle eines Getriebes verbunden ist. Eine elektrische Maschine ist nach der Art eines Kurbelwellen-Starter-Generators koaxial zu der ersten Eingangswelle angeordnet und über eine Hohlwelle mit einer Getriebeanordnung verbunden. Über die Hohlwelle kann die elektrische Maschine über zwei Übersetzungsstufen mit einem Differential verbunden werden. Ferner kann über die erste Eingangswelle (Innenwelle) Antriebsleistung von dem Verbrennungsmotor über wenigstens zwei Übersetzungsverhältnisse hin zu einem Abtrieb gelegt werden. Die Gangstufen werden überwiegend durch Radsätze eingerichtet, die zwischen der Eingangswellenanordnung und einer ersten Vorgelegewelle angeordnet sind. Zur Einrichtung der höchsten Gangstufe ist jedoch eine separate zweite Vorgelegewelle vorgesehen. Eine Rückwärtsgangstufe kann nur rein elektrisch durch Umkehrung der Drehrichtung der elektrischen Maschine eingerichtet werden, jedoch nicht verbrennungsmotorisch. Der Verbrennungsmotor kann jedoch die Vorwärtsgangstufen nutzen, die zwischen der Hohlwelle und der ersten Vorgelegewelle angeordnet sind, wozu eine Brückenkupplung vorgesehen ist, die die erste Eingangswelle und die zweite Eingangswelle miteinander verbinden kann. Insgesamt baut der Hybridantriebsstrang axial und radial relativ groß, und ermöglicht beispielsweise keinen Segelbetrieb.

Aus dem Dokument DE 10 2013 005 252 A1 ist ein Hybridantriebsstrang bekannt, bei dem ein Verbrennungsmotor über eine erste Eingangswelle und zwei Radsätze mit einer Vorgelegewelle verbunden ist. Die erste Eingangswelle ist über eine Kupplung mit einer zweiten Eingangswelle verbunden, an die über einen Antriebsstirnradsatz eine elektrische Maschine angeschlossen ist. Die zweite Eingangswelle ist dazu ausgebildet, über zwei weitere Radsätze, die die zweite Eingangswelle mit der Vorgelegewelle verbinden, eine Vorwärtsgangstufe und eine Rückwärtsgangstufe einzurichten. Der Hybridantriebsstrang ermöglicht eine einzelne elektrische Vorwärtsgangstufe und kann für den Verbrennungsmotor drei Vorwärtsgangstufen einrichten. Die Eingangswellen sind koaxial auf axial gegenüberliegenden Seiten der Brückenkupplung angeordnet. Die Getriebeanordnung weist dabei schaltbare Gangstufen auf, die mittels zugeordneter Synchron-Schaltkupplungen ein- und auslegbar sind. Die Schaltkupplungen sind in ein Schaltkupplungspaket integriert.
Die Dokumente DE 10 2013 211 975 A1 und DE 10 2011 002 472 A1 offenbaren weitere Hybridantriebsstränge, bei denen eine elektrische Maschine und ein Verbrennungsmotor jeweils koaxial zueinander angeordnet sind.

DE 10 2011 005 561 A1 zeigt einen Hybridantriebsstrang mit den Merkmalen des Oberbegriffs des Anspruchs 1. Allerdings ist die Anordnung der Verbrennungskraftmaschine und der elektrischen Maschine an einem Ende des Getriebes.

Aus der EP 2 530 356 A1, insbesondere nach der Ausführungsform der Figur 47, ist ein Hybrid-Antriebsstrang bekannt. Mit einer ersten und zweiten Antriebseinheit wird eine Getriebeanordnung angetrieben, die ein erstes und zweites Teilgetriebe aufweist. Damit ist mit einer ersten Antriebsleistung wenigstens zwei unterschiedliche Übersetzungen zu realisieren ebenso wie mit der zweiten Antriebsleistung. Die Getriebeanordnung weist zwei Eingangswellen auf, die jeweils mit einer Antriebseinheit verbunden sind. Damit sind die beiden Teilgetriebe über einen Brückenschaltung miteinander verbindbar. Die elektrische Maschine als einen Antriebseinheit weit einen Stirnradsatz auf und ist mit der zweiten Eingangswelle verbunden, wobei sie am gegenüberliegenden Ende des Getriebes, vom Verbrennungsmotor her gesehen, angeordnet ist.

Es ist vor diesem Hintergrund eine Aufgabe der Erfindung, einen verbesserten Hybridantriebsstrang für ein Kraftfahrzeug anzugeben.

Die obige Aufgabe wird gelöst durch einen Hybridantriebsstrang für ein Kraftfahrzeug, mit den Merkmalen von Anspruch 1.

Mit dem erfindungsgemäßen Antriebsstrang kann ein elektrischer Fahrbetrieb über wenigstens zwei unterschiedliche Übersetzungen mittels des zweiten Teilgetriebes eingerichtet werden. Ein reiner Fahrbetrieb mit der ersten Antriebseinheit ist zum einen über zwei Übersetzungen des ersten Teilgetriebes möglich, und, bei geschlossener Brückenkupplung, ferner über die zwei Übersetzungen des zweiten Teilgetriebes. Demzufolge kann ein Vorwärtsfahrbetrieb mit der ersten Antriebseinheit über wenigstens vier Übersetzungen eingerichtet werden, die vorzugsweise nach der Art von Gangstufen 1, 2, 3, 4 zueinander abgestimmt sind.

Von besonderem Vorzug ist es, wenn in dem ersten Teilgetriebe ein Radsatz vorhanden ist, der ein Rückwärtsfahrbetrieb ermöglicht, so dass, ein Rückwärtsfahren auch rein verbrennungsmotorisch möglich ist.

Die erste Antriebseinheit ist vorzugsweise ein Verbrennungsmotor. Die zweite Antriebseinheit ist eine elektrische Maschine, die vorzugsweise als Elektromotor oder als Generator arbeiten kann. Die zweite Antriebseinheit ist über einen Antriebsstirnradsatz mit der zweiten Eingangswelle verbunden. Dies ermöglicht eine relativ hohe Übersetzung zwischen einer Antriebswelle der zweiten Antriebseinheit und der zweiten Eingangswelle, so dass als zweite Antriebseinheit eine hochdrehende elektrische Maschine verwendbar ist, die deutlich kompakter baut als ein Kurbelwellen-Starter-Generator.

Ferner lässt sich durch die Anbindung der zweiten Antriebseinheit über den erfindungsgemäßen Antriebsstirnradsatz eine axial kompakte Bauweise erzielen.

Zur Einrichtung der Rückwärtsgangstufe kann ein kleines Umkehrrad vorgesehen sein, das an einer Umkehrwelle angeordnet ist. Zur Einrichtung der Rückwärtsgangstufe kann jedoch auch eine Rückwärtsgangwelle vorgesehen sein, an der eine zugeordnete Schaltkupplung festgelegt ist, wobei an der Rückwärtsgangwelle dann vorzugsweise ein Losrad festgelegt ist, das mit einem der Vorwärtsgang-Radsätze in Eingriff steht.

Von besonderem Vorzug ist es, wenn die höchste Gangstufe der Getriebeanordnung in dem ersten Teilgetriebe angeordnet ist. In diesem Fall kann bei geöffneter Brückenkupplung eine Höchstgeschwindigkeitsfahrt bei Antrieb über die erste Antriebseinheit erfolgen, wobei die zweite Antriebseinheit aufgrund der geöffneten Brückenkupplung abgekoppelt ist. Alternativ ist die höchste Gangstufe der Getriebeanordnung in dem zweiten Teilgetriebe angeordnet. In diesem Fall ist es bevorzugt, wenn eine niedrigste Gangstufe (Anfahrgangstufe) in dem ersten Teilgetriebe angeordnet ist. Sofern für eine Rückwärtsgangstufe ein eigener Radsatz vorgesehen ist, ist dieser vorzugsweise dem ersten Teilgetriebe zugeordnet.

Ferner sind mit dem Hybridantriebsstrang folgende Betriebsmodi möglich. Es ist ein Überlagerungsbetrieb von erster und zweiter Antriebsleistung über einen identischen Leistungsübertragungspfad möglich, und zwar über das zweite Teilgetriebe. Ferner ist ein Überlagerungsbetrieb von erster und zweiter Antriebsleistung möglich, wobei die zweite Antriebsleistung über das zweite Teilgetriebe zum Getriebeausgang geführt wird und wobei die erste Antriebsleistung über das erste Teilgetriebe zu dem Getriebeausgang geführt wird. Vorzugsweise ist ein Anfahren alleine mit der ersten Antriebseinheit möglich.

Die Brückenkupplung ist vorzugsweise derart ausgeführt, dass die erste Antriebsleistung auch über das zweite Teilgetriebe zu dem Getriebeausgang führbar ist. Generell ist es auch möglich, dass zweite Antriebsleistung bei geschlossener Brückenkupplung über das erste Teilgetriebe führbar ist. In der Regel benötigt die zweite Antriebseinheit jedoch keine derartige Mehrzahl von Übersetzungsstufen, so dass eine derartige Betriebsweise in der Regel nicht notwendig ist.

Die Getriebeanordnung weist wenigstens eine und vorzugsweise genau eine Vorgelegewelle auf, wobei zwischen der ersten Eingangswelle und der Vorgelegewelle eine Mehrzahl von schaltbaren Gang-Radsätzen ausgebildet ist. Vorzugsweise sind sämtliche Vorwärtsgangstufen, und insbesondere sämtliche Gangstufen des ersten Teilgetriebes durch Radsätze einrichtbar, die zwischen der ersten Eingangswelle und der einen Vorgelegewelle angeordnet sind. Mit anderen Worten ist es zur Einrichtung der Gangstufen des ersten Teilgetriebes nicht notwendig, zwei Vorgelegewellen vorzusehen, zusätzlich zu der einen Vorgelegewelle allenfalls eine Umkehrwelle für einen Rückwärtsgang.

Die erste Eingangswelle ist koaxial zu der zweiten Eingangswelle. Die zweite Eingangswelle ist vorzugsweise deutlich kürzer als die erste Eingangswelle und ist erfindungsgemäß als Hohlwelle um die erste Eingangswelle herum vorgesehen.

Erfindungsgemäß ist dabei koaxial zu der ersten Eingangswelle und zu der zweiten Eingangswelle ein Schaltkupplungspaket angeordnet, das die Brückenkupplung und Schaltkupplung für eine Gangstufe des ersten Teilgetriebes aufweist, wobei die erste Eingangswelle und die zweite Eingangswelle koaxial zueinander ausgerichtet sind, wobei die zweite Eingangswelle als Hohlwelle um die erste Eingangswelle herum angeordnet ist.

Weitere bevorzugte Ausführungsformen finden sich in den Unteransprüchen.

Ausführungsbeispiele der Erfindung sind in der Zeichnung dargestellt und werden in der nachfolgenden Beschreibung näher erläutert. Es zeigen:

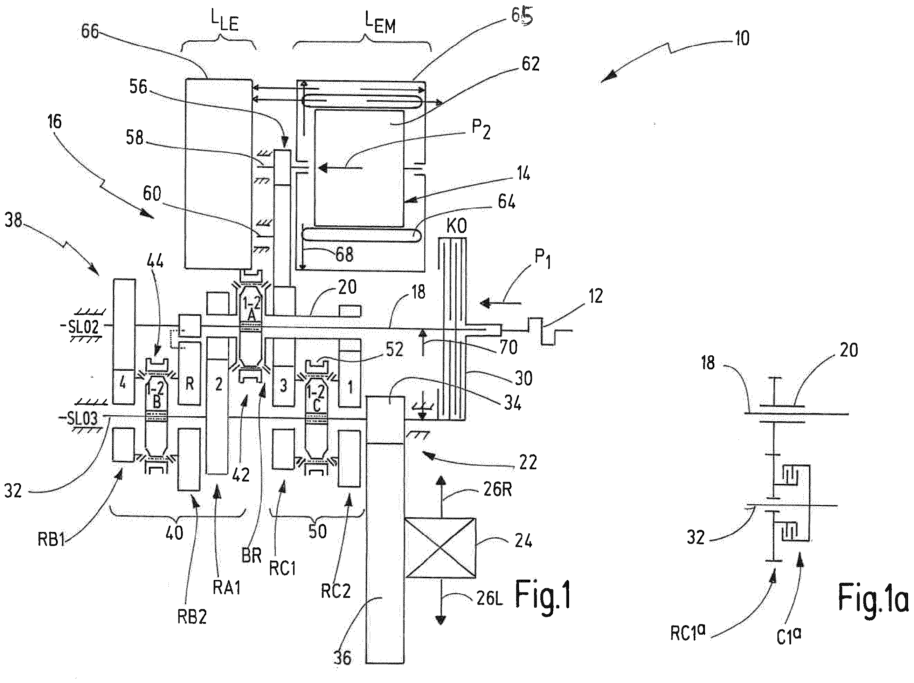

Fig. 1 : eine schematische Darstellung einer ersten Ausführungsform eines nicht erfindungsgemäßen Hybridantriebsstranges;
Fig. 1 a : eine Modifikation des Hybridantriebsstranges der Fig. 1 ;
Fig. 2 : eine Schalttabelle der Kupplungen des Antriebsstranges der Fig. 1 für unterschiedliche Antriebsmodi;
Fig. 3 : eine weitere Ausführungsform eines nicht erfindungsgemäßen Hybridantriebsstranges;
Fig. 4 : eine weitere Ausführungsform eines nicht erfindungsgemäßen Hybridantriebsstranges;
Fig. 5 : eine weitere Ausführungsform eines nicht erfindungsgemäßen Hybridantriebsstranges;
Fig. 6 : eine weitere Ausführungsform eines nicht erfindungsgemäßen Hybridantriebsstranges;
Fig. 7 : eine weitere Ausführungsform eines nicht erfindungsgemäßen Hybridantriebsstranges;
Fig. 8 : eine schematische Detailansicht einer weiteren Ausführungsform eines nicht erfindungsgemäßen Hybridanstriebsstranges; und
Fig. 9 : eine Ausführungsform eines erfindungsgemäßen Hybridantriebsstranges.

In Fig. 1 ist ein nicht erfindungsgemäßer Hybridantriebsstrang schematisch dargestellt und generell mit 10 bezeichnet.

Der Hybridantriebsstrang 10 weist eine erste Antriebseinheit 12 in Form eines Verbrennungsmotors auf. Die erste Antriebseinheit 12 stellt eine erste Antriebsleistung P1zum Antreiben eines Kraftfahrzeuges bereit. Der Hybridantriebsstrang 10 beinhaltet ferner eine zweite Antriebseinheit 14 in Form einer elektrischen Maschine. Die zweite Antriebseinheit 14 stellt zweite Antriebsleistung P2zum Antreiben des Kraftfahrzeuges bereit.

Der Hybridantriebsstrang 10 beinhaltet ferner eine Getriebeanordnung 16, die mit der ersten Antriebseinheit 12 und der zweiten Antriebseinheit 14 verbunden ist. Die Getriebeanordnung 16 weist eine erste Eingangswelle 18 auf, die mit der ersten Antriebseinheit 12 verbunden ist. Die Verbindung zwischen der ersten Eingangswelle 18 und der ersten Antriebseinheit 12 kann entweder eine starre Verbindung sein, ist jedoch vorzugsweise eine trennbare Verbindung. Die Getriebeanordnung 16 weist ferner eine zweite Eingangswelle 20 auf, die mit der zweiten Antriebseinheit 14 verbunden ist. Die zweite Eingangswelle 20 ist mit der zweiten Antriebseinheit 14 drehgekoppelt verbunden, derart, dass die Verbindung dazwischen vorzugsweise nicht trennbar ist. Generell kann jedoch zwischen der zweiten Eingangswelle 20 und der zweiten Antriebseinheit 14 auch eine Kupplung vorgesehen sein.

Die Getriebeanordnung 16 weist ferner einen Getriebeausgang 22 auf, der mit einem Differential 24 zum Verteilen von Antriebsleistung auf angetriebene Räder 26L, 26R gekoppelt ist.

Der Hybridantriebsstrang 10 kann für den Längseinbau in einem Kraftfahrzeug ausgelegt sein. Der Hybridantriebsstrang 10 kann jedoch auch für den Quereinbau in einem Kraftfahrzeug ausgelegt sein. In diesem Fall sind die Eingangswellen 18, 20 im Wesentlichen parallel zu Antriebswellen für die angetriebenen Räder 26L, 26R ausgerichtet.

Die erste Eingangswelle 18 der Getriebeanordnung 16 ist über eine Trenn- bzw. Anfahrkupplung 30 (K0) mit der ersten Antriebseinheit 12 verbunden. In manchen Fällen kann die Verbindung jedoch auch eine starre Verbindung sein.

Die Getriebeanordnung 16 weist ferner eine Vorgelegewelle 32 auf. Die Vorgelegewelle 32 bildet vorliegend gleichzeitig eine Ausgangs- bzw. Abtriebswelle der Getriebeanordnung 16. An der Vorgelegewelle 32 ist ein Abtriebsrad 34 starr festgelegt, das beispielsweise mit einem Differentialzahnrad 36 in Eingriff steht, das mit einem Antriebsglied des Differentials 24 gekoppelt ist. Das Abtriebsrad 34 ist vorzugsweise das der ersten Antriebseinheit 12 axial nächste Zahnrad der Getriebeanordnung 16. Das Abtriebsrad 34 ist in axialer Richtung gesehen zwischen der ersten Antriebseinheit 12 und der zweiten Eingangswelle 20 angeordnet, insbesondere zwischen der zweiten Eingangswelle 20 und der Anfahrkupplung 30.

Zwischen der Eingangswellenanordnung, die aus der ersten Eingangswelle 18 und der als Hohlwelle hierum angeordneten koaxialen zweiten Eingangswelle 20 besteht, und der Vorgelegewelle 32, ist eine Mehrzahl von Radsätzen 38 zum Einrichten unterschiedlicher Gangstufen angeordnet. Die Radsätze weisen jeweils ein mit einer Welle verbundenes Festrad und ein drehbar an der jeweils anderen Welle gelagertes Losrad auf, das über eine jeweilige Schaltkupplung mit der zugeordneten Welle verbindbar ist, um eine Übersetzungsstufe einzurichten.

Die Getriebeanordnung 16 beinhaltet ein erstes Teilgetriebe 40, mittels dessen erste Antriebsleistung P1 über die erste Eingangswelle 18 auf den Getriebeausgang 22 führbar ist, und zwar über die Vorgelegewelle 32. Das erste Teilgetriebe 40 ist auf der der ersten Antriebseinheit 12 gegenüberliegenden axialen Seite der zweiten Eingangswelle 20 vorgesehen. Das erste Teilgetriebe 40 weist einen Radsatz RA1 zur Einrichtung einer Vorwärtsgangstufe 2 auf, dessen Losrad über eine zugeordnete Schaltkupplung A1 mit der ersten Eingangswelle 18 verbindbar ist. Ferner weist das erste Teilgetriebe 40 einen weiteren Radsatz RB1 auf, der zur Einrichtung der Vorwärtsgangstufe 4 dient und der ein an der Vorgelegewelle 32 gelagertes Losrad aufweist, das über eine Schaltkupplung B1 mit der Vorgelegewelle 32 verbindbar ist. Ferner beinhaltet das erste Teilgetriebe 40 einen Radsatz RB2 zur Einrichtung einer Rückwärtsgangstufe, der ein mit der ersten Eingangswelle 18 verbundenes Festrad und ein an der Vorgelegewelle 32 drehbar gelagertes Losrad aufweist, das über eine Schaltkupplung B2 mit der Vorgelegewelle 32 verbindbar ist. Das Festrad und das Losrad des Radsatzes RB2 sind über ein Drehrichtungsumkehrrad miteinander verbunden, wie es in Fig. 1 schematisch angedeutet ist.

Die Schaltkupplung A1 ist Teil eines ersten Schaltkupplungspaketes 42. Eine Schaltkupplung A2 des ersten Schaltkupplungspaketes 42 ist dazu ausgebildet, die zweite Eingangswelle 20 bedarfsweise mit der ersten Eingangswelle 18 zu verbinden. Die Schaltkupplung A2 ist folglich als Brückenkupplung BR ausgebildet.

Die Schaltkupplung B1 und die Schaltkupplung B2 sind in ein zweites Schaltkupplungspaket 42 integriert, das zwischen den Radsätzen RB1, RB2 an der Vorgelegewelle 32 angeordnet ist. Das erste Schaltkupplungspaket 42 ist axial zwischen dem Radsatz RA1 und der zweiten Eingangswelle 20 an der ersten Eingangswelle 18 angeordnet.

Bei geöffneter Schaltkupplung A2 (BR) ist es möglich, Antriebsleistung P1über das erste Teilgetriebe 40 auf den Getriebeausgang 22 zu führen, und zwar über die Vorwärtsgangstufe 2 oder die Vorwärtsgangstufe 4 oder über die Rückwärtsgangstufe R.

Die Getriebeausgang 22 weist ferner ein zweites Teilgetriebe 50 auf. Das zweite Teilgetriebe 50 beinhaltet einen Radsatz RC1, der ein an der zweiten Eingangswelle 20 festgelegtes Festrad und ein an der Vorgelegewelle 32 drehbar gelagertes Losrad aufweist, dass mittels einer Schaltkupplung C1 mit der Vorgelegewelle 32 verbindbar ist. Ferner beinhaltet das zweite Teilgetriebe 50 einen Radsatz RC2, der ein mit der zweiten Eingangswelle 20 fest verbundenes Festrad und ein an der Vorgelegewelle 32 drehbar gelagertes Losrad aufweist, das mittels einer Schaltkupplung C2 mit der Vorgelegewelle 32 verbindbar ist. Der Radsatz RC1 dient zur Einrichtung einer Vorwärtsgangstufe 3. Der Radsatz RC2 dient zur Einrichtung einer Vorwärtsgangstufe 1.

Die Schaltkupplungen C1, C2 sind in ein drittes Schaltkupplungspaket 52 integriert, das in axialer Richtung zwischen den Radsätzen RC1 und RC2 an der Vorgelegewelle 32 angeordnet ist.

Wenigstens eine der Schaltkupplungen C1, C2 des zweiten Teilgetriebes 50 kann als Lastschaltkupplung ausgebildet sein, wie es in Fig. 1a bei C1^{a} für einen Radsatz RC1^{a} schematisch angedeutet ist.

Dies ermöglicht insbesondere eine komfortablere Anbindung der zweiten Antriebseinheit 14 an den Antriebsstrang.

Eine Lastschaltkupplung ist vorliegend insbesondere als Reibkupplung, vorzugsweise als Lamellenkupplung ausgebildet, die nass läuft. Mit einer Lastschaltkupplung wird vorzugsweise kein Reibschluss zwischen einem Losrad des zugeordneten Radsatzes und der betreffenden Welle eingerichtet, sondern ein Kraftschluss, der hinreichend ist, um die zu übertragenden Momente aufnehmen zu können.

Das Abtriebsrad 34 ist auf der dem dritten Schaltkupplungspaket 52 gegenüberliegenden axialen Seite des Radsatzes RC2 angeordnet. Ausgehend von der Seite des Getriebeeinganges ist die Abfolge der Radsätze und Schaltkupplungspakete in der Getriebeanordnung 16 wie folgt: RC2, 52, RC1, 42, RA1, RB1, 44, RB1.

Die zweite Antriebseinheit 14 ist über einen Antriebsstirnradsatz 56 mit der zweiten Eingangswelle 20 verbunden. Genauer gesagt ist an einer zu den Wellen 18, 20, 32 vorzugsweise parallel angeordneten Motorwelle 58 der zweiten Antriebseinheit 14 ein nicht näher bezeichnetes Antriebsrad festgelegt, das mit einem Zwischenrad in Eingriff steht bzw. kämmt, das an einer Zwischenwelle 60 festgelegt ist. Das Zwischenrad steht in Eingriff bzw. kämmt mit einem der Zahnräder, die an der zweiten Eingangswelle 20 festgelegt sind, vorliegend mit dem an der zweiten Eingangswelle 20 festgelegten Festrad des Radsatzes RC1 zur Einrichtung der Vorwärtsgangstufe 3.

Die zweite Antriebseinheit 14 ist als elektrische Maschine mit einem Rotor 62 und einem Stator 64 ausgebildet. Der Rotor 62 ist ein Innenrotor. Der Stator 64 ist an einem Gehäuse 65 festgelegt, das eine axiale Länge L_{EM} aufweist. Der elektrischen Maschine 14 ist eine Ansteuerungseinrichtung 66 in Form einer Leistungselektronik zugeordnet, die in an sich bekannter Weise Leistungsschalter beinhaltet, um in der elektrischen Maschine in Drehfeld zu erzeugen, vorzugsweise über eine PWM-Ansteuerung. Die Ansteuerungseinrichtung 66 weist eine axiale Länge L_{LE} auf.

Eine radiale Erstreckung des Gehäuses 65 der zweiten Antriebseinheit 14 ist in Fig. 1 mit 68 bezeichnet. In Fig. 1 ist ferner ein Achsabstand 70 zwischen der Eingangswelle 18 und der Vorgelegewelle 32 bei 70 gezeigt. 70 ist deutlich kleiner als 68. L_{EM} ist kleiner als der axiale Abstand zwischen der Anfahrkupplung 30 oder der ersten Antriebseinheit 12 und dem Antriebsstirnradsatz 56. Die axiale Länge L_{LE} ist vorzugsweise kleiner als Länge L_{EM}.

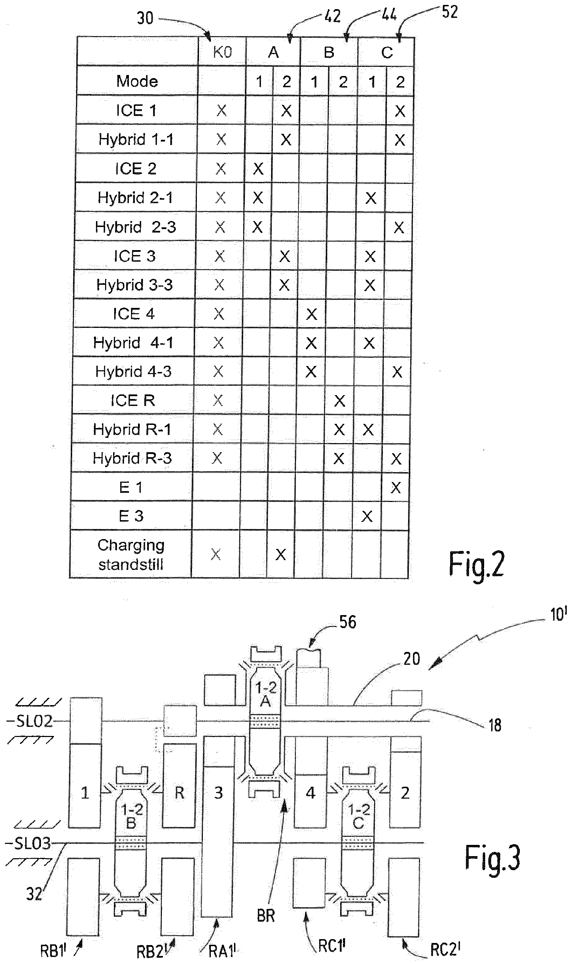

Mit dem Hybridantriebsstrang 10 sind folgende Betriebsweisen möglich, wie es in Fig. 2 dargestellt ist:
- ein rein verbrennungsmotorischer Antrieb in den Gangstufen 1, 2, 3, 4 (ICE 1,2,3,4),
- ein Hybrid-Antriebsmodus, bei dem Antriebsleistung P1 und Antriebsleistung P2 über einen gemeinsamen Leistungsübertragungspfad überlagert wird, beispielsweise über die Radsätze RC1 oder RC2 (Hybrid 1-1 und Hybrid 3-3),
- ein Torque-Split-Hybrid-Antriebsmodus, bei dem verbrennungsmotorische Leistung P1 über das erste Teilgetriebe 40 zum Getriebeeingang 22 geführt wird und bei dem elektromotorische Antriebsleistung P2 über das zweite Teilgetriebe 50 auf den Getriebeausgang 22 geführt wird, so dass eine Aufsummierung im Bereich des Getriebeausgangs 22 erfolgt (Hybrid 2-1, Hybrid 2-3, Hybrid 4-1, Hybrid 4-3, Hybrid R-1, Hybrid R-3),
- ein rein elektromotorischer Antriebsmodus, bei dem elektromotorische Antriebsleistung P2 über das zweite Teilgetriebe 50 geführt wird (E1, E3), und
- ein Standlademodus, bei dem ein in Fig. 1 nicht näher gezeigter Energiespeicher zum Antrieb der zweiten Antriebseinheit 14 bei einem Stillstand des Kraftfahrzeuges geladen wird ("charging standstill").

In Fig. 2 sind die oben genannten Antriebsmodi dargestellt, wobei in Fig. 2 jeweils durch ein Kreuz ("X") dargestellt ist, welche Kupplungen in welchem Antriebsmodus geschlossen ist. Beispielsweise ist in einem rein verbrennungsmotorischen Antriebsmodus in der Gangstufe 1 zum einen die Anfahrkupplung 30 geschlossen. Ferner ist die Schaltkupplung A2 geschlossen, so dass das erste Teilgetriebe 40 und das zweite Teilgetriebe 50 miteinander verbunden sind. Schließlich ist die Schaltkupplung C2 geschlossen, derart, dass Antriebsleistung P1 über die Anfahrkupplung 30, die Eingangswelle 18, die geschlossene Schaltkupplung A2, die zweite Eingangswelle 20 und den Radsatz RC2 sowie über die geschlossene Schaltkupplung C2 auf die Vorgelegewelle 32 geführt wird, von wo die Antriebsleistung P1 auf den Getriebeausgang 22 geführt wird.

Nachstehend werden weitere Ausführungsformen von Hybridantriebssträngen erläutert, die hinsichtlich Aufbau und Funktionsweise generell dem Aufbau und der Funktionsweise des Hybridantriebsstranges 10 der Fig. 1 entsprechen. Gleiche Elemente sind daher durch gleiche Bezugszeichen gekennzeichnet. Im Folgenden werden im Wesentlichen die Unterschiede erläutert.

In Fig. 3 ist ein Antriebsstrang 10' gezeigt, bei dem das grundsätzliche Layout identisch ist wie bei dem Antriebsstrang 10 der Fig. 2. Der Radsatz RC2' ist jedoch der Vorwärtsgangstufe 2 zugeordnet. Der Radsatz RC1' ist der Vorwärtsgangstufe 4 zugeordnet. Der Radsatz RA1' ist der Vorwärtsgangstufe 3 zugeordnet. Der Radsatz RB2' ist nach wie vor der Rückwärtsgangstufe zugeordnet, und der Radsatz RB1' ist der Vorwärtsgangstufe 1 zugeordnet.

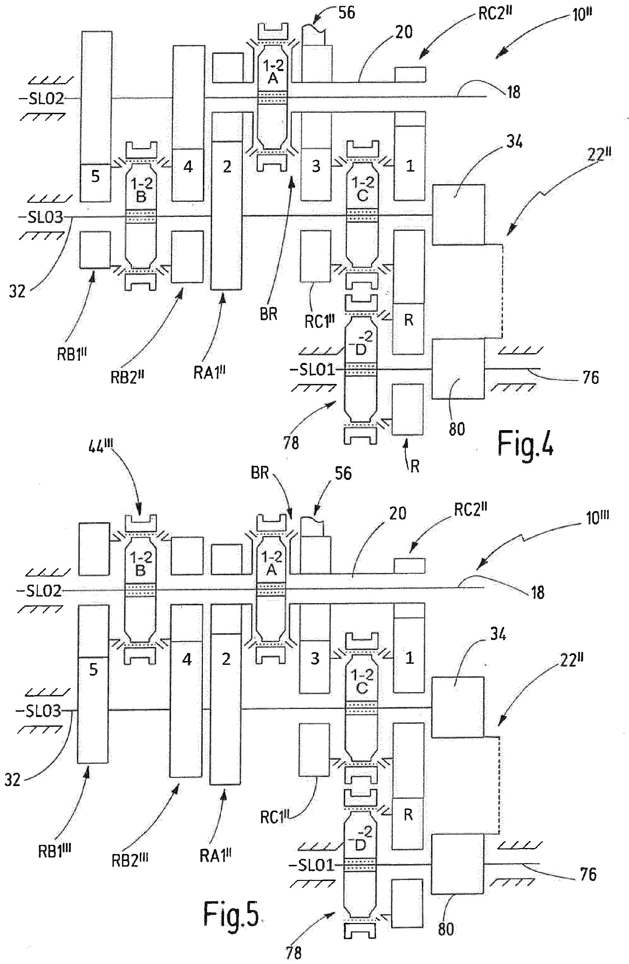

In Fig. 4 ist eine weitere Ausführungsform eines Antriebsstranges 10-2' dargestellt. Dieser basiert auf dem Layout des Antriebsstranges 10 der Fig. 1. Der Radsatz RC2" ist nach wie vor der Vorwärtsgangstufe 1 zugeordnet. Der Radsatz RC1" ist nach wie vor der Vorwärtsgangstufe 3 zugeordnet. Der Radsatz RA1" ist nach wie vor der Vorwärtsgangstufe 2 zugeordnet. Benachbart zu dem Radsatz RA1" ist der Radsatz RB2" angeordnet, der in diesem Fall jedoch der Vorwärtsgangstufe 4 zugeordnet ist. Der Radsatz RB1" ist einer weiteren Vorwärtsgangstufe 5 zugeordnet.

Zum Einrichten einer Rückwärtsgangstufe ist eine Rückwärtsgangwelle 76 vorgesehen, die parallel zu der Vorgelegewelle 32 angeordnet ist. An der Rückwärtsgangwelle 76 ist ein Rückwärtsganglosrad drehbar gelagert, das mit dem Losrad des Radsatzes RC2" in Eingriff steht bzw. kämmt. Ferner ist an der Rückwärtsgangwelle 76 ein Schaltkupplungspaket 78 mit einer Schaltkupplung D2 angeordnet, mittels der das Rückwärtsganglosrad bedarfsweise mit der Rückwärtsgangwelle 76 verbindbar ist. An der Rückwärtsgangwelle 76 ist ferner ein Abtriebsrad 80 festgelegt, das parallel zu dem Abtriebsrad 34 mit einem Antrieb eines Differentials verbindbar ist, wie es in Fig. 4 durch eine gestrichelte Linie angedeutet ist.

In Fig. 5 ist eine weitere Ausführungsform eines Antriebsstranges 10'" gezeigt, der hinsichtlich Aufbau und Funktionsweise generell dem Antriebsstrang 10" entspricht. Im Unterschied zu dem Antriebsstrang 10" ist bei dem Antriebsstrang 10‴ das Schaltkupplungspaket 44‴ an der ersten Eingangswelle 18 angeordnet, derart, dass die Losräder der Radsätze RB1‴ und RB2'" drehbar an der ersten Eingangswelle 18 gelagert sind, wobei die zugeordneten Festräder dieser Radsätze an der Vorgelegewelle 32 festgelegt sind.

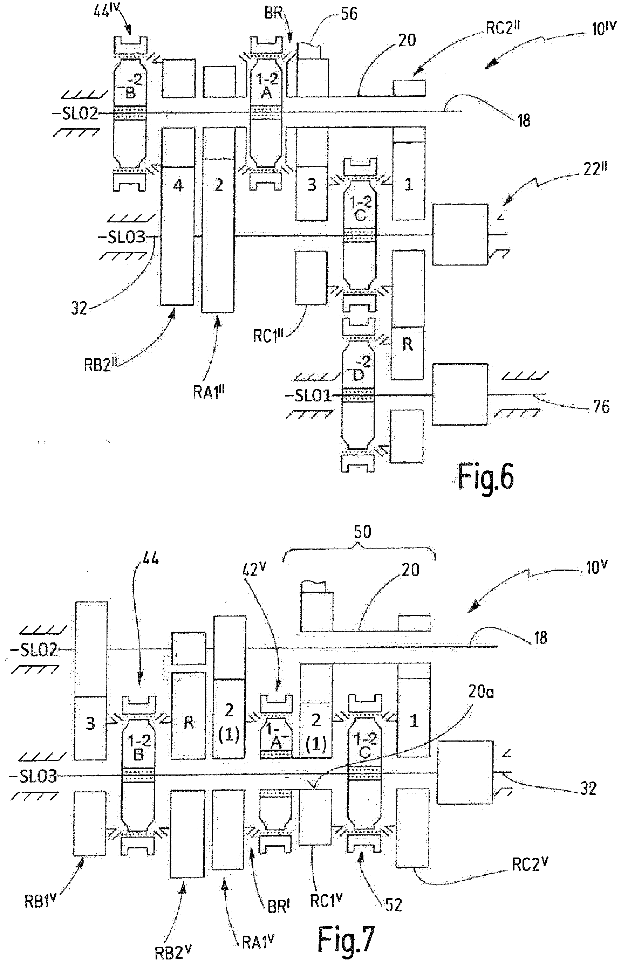

In Fig. 6 ist eine weitere Ausführungsform eines Antriebsstranges 10^{IV} gezeigt. Dieser entspricht hinsichtlich Aufbau und Funktionsweise generell dem Antriebsstrang der Fig. 5. Hierbei ist jedoch kein Radsatz RB1 zur Einrichtung einer Vorwärtsgangstufe vorgesehen. Stattdessen beinhaltet das Schaltkupplungspaket 44^{IV} nur eine Schaltkupplung, nämlich die Schaltkupplung B2 zur Einrichtung der Vorwärtsgangstufe 4 mittels des Radsatzes RB2".

In Fig. 7 ist eine weitere Ausführungsform eines Antriebsstranges 10^{V} dargestellt. In dem Antriebsstrang 10^{V} ist der Radsatz RC2^{V} der Vorwärtsgangstufe 1 zugeordnet. Der Radsatz RC1^{V} ist der Vorwärtsgangstufe 2 zugeordnet. Die Radsätze RC1^{V} und RC2^{V} sind Teil eines zweiten Teilgetriebes 50.

Der Radsatz RA1^{V} ist der Vorwärtsgangstufe 2 und der Vorwärtsgangstufe 1 zugeordnet. Der Radsatz RB2^{V} ist dem Rückwärtsgang zugeordnet und ist im Wesentlichen identisch aufgebaut wie der Radsatz RB2 der Fig. 1. Der Radsatz RB1^{V} ist der Vorwärtsgangstufe 3 zugeordnet. Das Schaltkupplungspaket 44 ist an der Vorgelegewelle 32 angeordnet. Das Schaltkupplungspaket 52 zwischen den Radsätzen RC1^{V} und RC2^{V} angeordnet.

Eine Brückenkupplung BR' ist durch eine Schaltkupplung A1 eines Schaltkupplungspaketes 42^{V} gebildet. Das Schaltkupplungspaket 42^{V} ist vorliegend an der Vorgelegewelle 32 drehbar gelagert, und zwar an einer weiteren zweiten Eingangswelle 20a, die an der ein Festrad des Radsatzes RC1^{V} festgelegt ist, das mit einem an der ersten Eingangswelle 20 festgelegten Festrad des Radsatzes RC1^{V} in Eingriff steht bzw. kämmt. An der weiteren Eingangswelle 20a ist ferner das Schaltkupplungspaket 42^{V} festgelegt, wobei die Schaltkupplung A1 dazu ausgebildet ist, die weitere Eingangswelle 20a mit dem Losrad des Radsatzes RA1^{V} zu verbinden.

Mit anderen Worten ist bei dem Antriebsstrang 10^{V} die Brückenkupplung BR' koaxial zu der Vorgelegewelle 32 angeordnet. Der Radsatz RA1^{V} ist quasi ein Vorübersetzungsradsatz für die Gangstufen 1 und 2.

Bei geöffneter Brückenkupplung BR' kann über das zweite Teilgetriebe 50 elektromotorische Leistung P2 direkt auf den Getriebeausgang 22 geführt werden.

Verbrennungsmotorische Leistung kann über die Radsätze RB1^{V} und RB2^{V} auf die Vorgelegewelle 32 und folglich auf den Getriebeausgang 22 geführt werden. Zur Nutzung der Vorwärtsgangstufen 1 und 2 im verbrennungsmotorischen Betrieb erfolgt eine Vorübersetzung über den Radsatz RA1^{V}, der dann bei geschlossener Brückenkupplung BR' das mit der weiteren Eingangswelle 20a festgelegte Festrad des Radsatzes RC1^{V} antreibt und folglich die Eingangswelle 20 antreibt, die koaxial zu der ersten Eingangswelle 18 angeordnet ist. Folglich kann durch Schließen der Kupplung C1 oder der Kupplung C2 entweder die zweite Vorwärtsgangstufe 2 rein verbrennungsmotorisch genutzt werden, oder die Vorwärtsgangstufe 1.

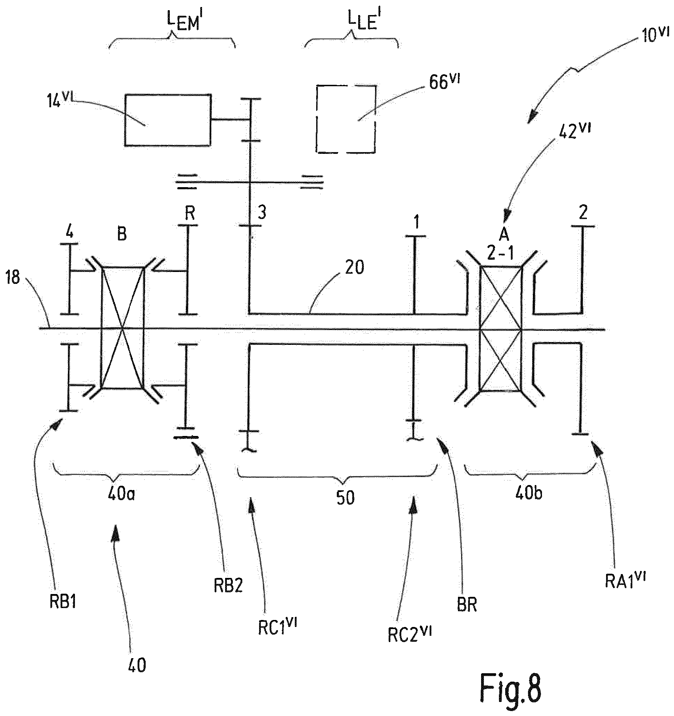

Wie es in Fig. 8 gezeigt ist, kann das erste Teilgetriebe 40 auch in zwei axial beabstandete Getriebeabschnitte 40a, 40b aufgeteilt seien, wobei das zweite Teilgetriebe 50 in axialer Richtung zwischen diesen Getriebeabschnitten 40a, 40b des ersten Teilgetriebes 40 angeordnet ist.

Der Antriebsstrang 10^{VI} kann im Übrigen dem Antriebsstrang 10 der Fig. 1 entsprechen. Es kann gegenüber dem Antriebsstrang 10 der Fig. 1 ggf. eine axial kompaktere Bauweise erzielt werden. Die Einheit aus dem Radsatz RA1 und dem Schaltkupplungspaket 42 ist in Bezug auf das zweite Teilgetriebe 50 axial auf die dem Getriebeeingang zugewandte Seite "gespiegelt", derart, dass der Gang-Radsatz RA1^{VI} für die Vorwärtsgangstufe 2 nun unmittelbar benachbart ist zu der Anfahrkupplung 30 (in Fig. 8 nicht dargestellt). Das Schaltkupplungspaket 42^{VI} ist in axialer Richtung zwischen dem Gang-Radsatz RA1^{VI} und dem zweiten Teilgetriebe 50 angeordnet. Eine Schaltkupplung A1 des Schaltkupplungspaketes 42^{VI} dient dazu, das Losrad des Gang-Radsatzes RA1^{VI} für die Vorwärtsgangstufe 2 mit der ersten Eingangswelle 18 zu verbinden. Die zweite Schaltkupplung A2 des Schaltkupplungspaketes 42^{VI} dient dazu, die erste Eingangswelle 18 mit der zweiten Eingangswelle 20 zu verbinden und ist folglich als Brückenkupplung BR ausgebildet.

Bei dem Hybridanstriebsstrang 10^{VI} der Fig. 8 kann der Radsatz RB2 für die Rückwärtsgangstufe unmittelbar benachbart zu dem Radsatz RC1^{VI} angeordnet sein, mittels dessen die zweite Antriebseinheit 14 an die zweite Eingangswelle 20 angebunden ist.

Ferner können die Anordnungen der Getriebeabschnitte 40a, 40b in diesen Fällen jeweils vertauscht werden, so dass beispielsweise der Getriebeabschnitt 40a zwischen dem zweiten Teilgetriebe 50 und der Anfahrkupplung 30 angeordnet ist.

In Fig. 8 ist ferner dargestellt, dass die axiale Anordnung von zweiter Antriebseinheit 14^{VI} und Ansteuerungseinheit 66^{VI} in Bezug auf den Radsatz RC1^{VI} axial vertauscht werden kann, so dass die Länge LE_{EM} auf der dem Getriebeausgang zugewandten Seite des Radsatzes RC1^{VI} angeordnet ist.

Ein derartiges Vertauschen von Antriebseinheit 14 und Ansteuerungseinheit 66 kann auch bei den anderen oben beschriebenen Antriebssträngen erfolgen. Ferner kann auch bei den oben genannten Antriebssträngen jeweils das erste Teilgetriebe 40 in zwei Getriebeabschnitte 40a, 40b unterteilt sein, zwischen denen das zweite Teilgetriebe 50 axial aufgenommen ist.

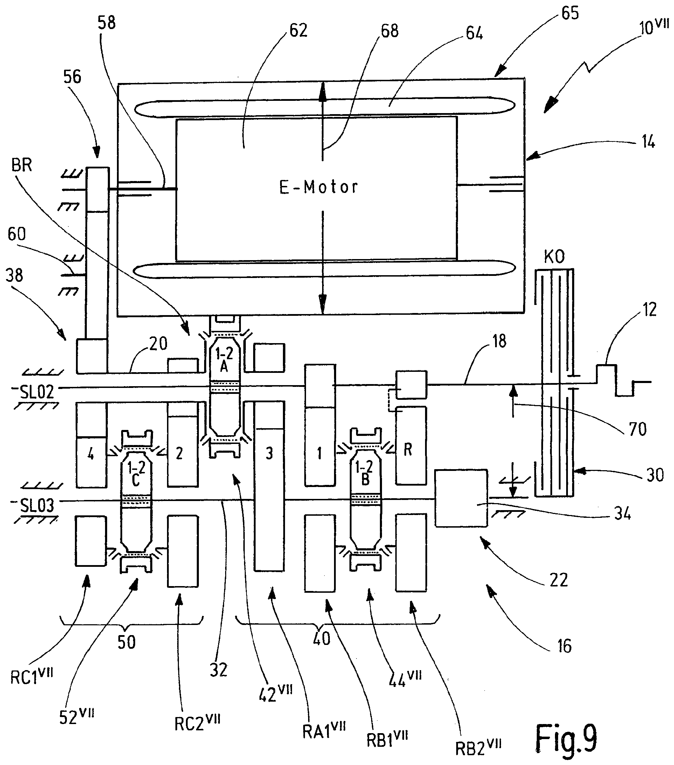

In Fig. 9 ist der erfindungsgemäße Hybridantriebsstrang 10^{VII} gezeigt, dessen prinzipieller Aufbau und Funktionsweise generell dem Hybridantriebsstrang 10' der Fig. 3 entspricht. Wie bei dem Hybridantriebsstrang 10' der Fig. 1 sind dem ersten Teilgetriebe 40 die Vorwärtsgangstufe 1, 3 und eine Rückwärtsgangstufe zugeordnet, und dem zweiten Teilgetriebe 50 sind die Vorwärtsgangstufen 2 und 4 zugeordnet. Ebenfalls ist es wie bei dem Hybridantriebsstrang 10' der Fig. 3 vorgesehen, dass konzentrisch zu den Eingangswellen 18, 20 ein Schaltkupplungspaket A1, A2 bzw. 42^{VII} vorgesehen ist, das die Brückenkupplung BR und eine Gang-Schaltkupplung A2 für die Vorwärtsgangstufe 3 des ersten Teilgetriebes 40 aufweist. Ebenso ist es wie bei dem Hybridantriebsstrang 10' der Fig. 3 vorgesehen, dass zwischen Radsätzen für die Vorwärtsgangstufe 1 und die Rückwärtsgangstufe an der Vorgelegewelle 32 ein Schaltkupplungspaket B1, B2 bzw. 44^{VII} angeordnet ist, das Gang-Schaltkupplungen B1 für die Vorwärtsgangstufe 1 und B2 für die Rückwärtsgangstufe beinhaltet. Ebenso ist es wie bei dem Hybridantriebsstrang 10' der Fig. 3 vorgesehen, dass zwischen den Radsätzen RC1^{VII,} RC2^{VII} für die Vorwärtsgangstufen 4 und 2 ein Schaltkupplungspaket C1, C2 bzw. 52^{VII} angeordnet ist, das eine Schaltkupplung C1 für die Vorwärtsgangstufe 4 und eine Schaltkupplung C2 für die Vorwärtsgangstufe 2 beinhaltet. Das Schaltkupplungspaket 52^{VII} ist koaxial zu der Vorgelegewelle 32 angeordnet.

Bei dem Hybridantriebsstrang 10^{VII} der Fig. 9 ist das erste Teilgetriebe 40 in axialer Richtung zwischen dem zweiten Teilgetriebe 50 und der ersten Antriebseinheit 12 angeordnet. Genauer ist das erste Teilgetriebe 40 zwischen dem zweiten Teilgetriebe 50 und dem Getriebeausgang 22 angeordnet. Ferner ist der Antriebsstirnradsatz 56 im Bereich eines der ersten Antriebseinheit 12 axial gegenüberliegenden Endes der Getriebeanordnung 16 angeordnet und bildet einen am äußersten axialen Ende der Getriebeanordnung 16 angeordneten Radsatz. Der Antriebsstirnradsatz 56 ist dabei wie bei der Ausführungsform der Fig. 3 an ein Festrad des Radsatzes RC1^{VII} für die Vorwärtsgangstufe 4 angebunden.

Ausgehend von dem Getriebeausgang 22 weist der Hybridantriebsstrang 10^{VII} die folgenden Elemente auf: (i) Radsatz RB2^{VII} für die Rückwärtsgangstufe, wobei der Radsatz RB2^{VII} ein mit der ersten Eingangswelle 18 verbundenes Festrad und ein an der Vorgelegewelle 32 drehbar gelagertes Losrad aufweist, wie auch ein Zwischenrad, das an einer nicht näher dargestellten Drehrichtungsumkehrwelle festgelegt ist, (ii) das Schaltkupplungspaket 44^{VII} an der Vorgelegewelle 32, (iii) der Radsatz RB1^{VII} für die Vorwärtsgangstufe 1 mit einem Festrad an der ersten Eingangswelle 18 und einem Losrad an der Vorgelegewelle 32, (iv) der Radsatz RA1^{VII} für die Vorwärtsgangstufe 3 mit einem Losrad an der ersten Eingangswelle 18 und einem Festrad an der Vorgelegewelle 32, (v) das Schaltkupplungspaket 42^{VII} an der ersten Eingangswelle 18, (vi) der Radsatz RC2^{VII} für die Vorwärtsgangstufe 2 mit einem Festrad an der zweiten Eingangswelle 20 und einem Losrad an der Vorgelegewelle 32, (vii) das Schaltkupplungspaket 52^{VII} an der Vorgelegewelle 32 und (viii) der Radsatz RC1^{VII} für die Vorwärtsgangstufe 4 mit einem Festrad an der zweiten Eingangswelle 20 und einem Losrad an der Vorgelegewelle 32.

Die zweite Antriebseinheit 14 in Form einer elektrischen Maschine erstreckt sich in axialer Richtung zwischen dem Antriebsstirnradsatz 56 und der Anfahrkupplung 30.

Der Achsabstand 70 zwischen der ersten Eingangswelle 18 und der Vorgelegewelle 32 kann in einem Bereich von 70 bis 90 mm liegen.

## Patentansprüche

1. Hybridantriebsstrang (10) für ein Kraftfahrzeug, mit
- einer ersten Antriebseinheit (12) zur Bereitstellung einer ersten Antriebsleistung (P1) zum Antreiben des Kraftfahrzeuges,
- einer zweiten Antriebseinheit (14) zur Bereitstellung einer zweiten Antriebsleistung (P2) zum Antreiben des Kraftfahrzeuges; und
- einer Getriebeanordnung (16), die mit der ersten Antriebseinheit (12) und mit der zweiten Antriebseinheit (14) verbunden ist, wobei die Getriebeanordnung (16) ein erstes Teilgetriebe (40) aufweist, mittels dessen erste Antriebsleistung (P1) mit wenigstens zwei unterschiedlichen Übersetzungen zu einem Getriebeausgang (22) führbar ist, und ein zweites Teilgetriebe (50) aufweist, mittels dessen zweite Antriebsleistung (P2) mit wenigstens zwei unterschiedlichen Übersetzungen zu dem Getriebeausgang führbar ist;
- wobei die Getriebeanordnung (16) eine erste Eingangswelle (18) und eine zweite Eingangswelle (20) aufweist, wobei die erste Eingangswelle (18) mit der ersten Antriebseinheit (12) verbunden ist und wobei die zweite Eingangswelle (20) mit der zweiten Antriebseinheit (14) verbunden ist,
- wobei das erste Teilgetriebe (40) und das zweite Teilgetriebe (50) über eine Brückenkupplung (BR) miteinander verbindbar sind, und
- wobei die zweite Antriebseinheit (14) eine elektrische Maschine (14) aufweist, die über einen Antriebsstirnradsatz (56) mit der zweiten Eingangswelle (20) verbunden ist,
- wobei koaxial zu der ersten Eingangswelle (18) und zu der zweiten Eingangswelle (20) ein Schaltkupplungspaket (42^{VII}) angeordnet ist, das die Brückenkupplung (BR) und eine Schaltkupplung (A1; A2) für eine Gangstufe (3) des ersten Teilgetriebes (40) aufweist, wobei die erste Eingangswelle (18) und die zweite Eingangswelle (20) koaxial zueinander ausgerichtet sind, wobei die zweite Eingangswelle (20) als Hohlwelle um die erste Eingangswelle (18) herum angeordnet ist, **dadurch gekennzeichnet, dass** der Antriebsstirnradsatz (56) im Bereiche eines der ersten Antriebseinheit (12) axial gegenüber liegenden Endes der Getriebeanordnung (16) angeordnet ist.

2. Hybridantriebsstrang nach Anspruch 1, wobei die zweite Antriebseinheit (14) in axialer Richtung überlappend mit wenigstens einem Abschnitt des zweiten Teilgetriebes (50) angeordnet ist.

3. Hybridantriebsstrang nach einem der Ansprüche 1 - 2, wobei der Antriebsstirnradsatz (56) axial mit einem schaltbaren Gang-Radsatz (RC1) ausgerichtet ist und mit dem schaltbaren Gang-Radsatz in Eingriff steht.

4. Hybridantriebsstrang nach einem der Ansprüche 1 - 3, wobei in axialer Richtung zwischen dem Antriebsstirnradsatz (56) und der ersten Antriebseinheit (12) wenigstens ein weiterer schaltbarer Gang-Radsatz (RC2) angeordnet ist.

5. Hybridantriebsstrang nach einem der Ansprüche 1 - 4, wobei die erste Antriebseinheit (12) über eine Anfahrkupplung (30) mit der ersten Eingangswelle (18) verbunden ist.

6. Hybridantriebsstrang nach einem der Ansprüche 1 - 5, wobei die zweite Eingangswelle (20) dem zweiten Teilgetriebe (50) zugeordnet ist, wobei das zweite Teilgetriebe (50) wenigstens zwei Gang-Schaltkupplungen (C1, C2) für zwei Vorwärtsgänge aufweist, wobei wenigstens eine oder wenigstens zwei Gang-Schaltkupplungen (C1, C2) als Lastschaltkupplung (C1^{a}) ausgebildet ist.

7. Hybridantriebsstrang nach einem der Ansprüche 1 - 6, wobei das erste Teilgetriebe (40) ein an der ersten Eingangswelle (18) festgelegtes Festrad für eine erste Vorwärtsgangstufe (1) und ein an der ersten Eingangswelle (18) drehbar gelagertes Losrad für eine dritte Vorwärtsgangstufe (3) aufweist und wobei das zweite Teilgetriebe (50) ein an der zweiten Eingangswelle (20) festgelegtes Festrad für eine zweite Vorwärtsgangstufe (2) und ein an der zweiten Eingangswelle (20) festgelegtes Festrad für eine vierte Vorwärtsgangstufe (4) aufweist.

## Claims

1. Hybrid traction chain (10) for a motor vehicle, with
- a first drive unit (12) for providing a first drive power (P1) for driving the motor vehicle,
- a second drive unit (14) for providing a second drive power (P2) for driving the motor vehicle; and
- a transmission arrangement (16) which is connected to the first drive unit (12) and to the second drive unit (14), the transmission arrangement (16) having a first sub-transmission (40), by means of which first drive power (P1) can be conducted with at least two different transmission ratios to a transmission output (22), and having a second sub-transmission (50), by means of which second drive power (P2) can be conducted with at least two different transmission ratios to the transmission output;
- the transmission arrangement (16) having a first input shaft (18) and a second input shaft (20), the first input shaft (18) being connected to the first drive unit (12), and the second input shaft (20) being connected to the second drive unit (14),
- it being possible for the first sub-transmission (40) and the second sub-transmission (50) to be connected to one another via a bridge clutch (BR), and
- the second drive unit (14) having an electric machine (14) which is connected via a drive spur gear set (56) to the second input shaft (20),
- a shifting clutch pack (42^{VII}) being arranged coaxially with respect to the first input shaft (18) and with respect to the second input shaft (20), which shifting clutch pack (42^{VII}) has the bridge clutch (BR) and a shifting clutch (A1; A2) for a gear stage (3) of the first sub-transmission (40), the first input shaft (18) and the second input shaft (20) being oriented coaxially with respect to one another, the second input shaft (20) being arranged as a hollow shaft around the first input shaft (18), **characterized in that** the drive spur gear set (56) is arranged in the region of an end of the transmission arrangement (16), which end lies axially opposite the first drive unit (12).

2. Hybrid traction chain according to Claim 1, the second drive unit (14) being arranged so as to overlap in the axial direction with at least one section of the second sub-transmission (50).

3. Hybrid traction chain according to either of Claims 1 and 2, the drive spur gear set (56) being aligned axially with a shiftable gearwheel set (RC1) and being in engagement with the shiftable gearwheel set.

4. Hybrid traction chain according to one of Claims 1 to 3, at least one further shiftable gearwheel set (RC2) being arranged in the axial direction between the drive spur gear set (56) and the first drive unit (12).

5. Hybrid traction chain according to one of Claims 1 to 4, the first drive unit (12) being connected via a start-up clutch (30) to the first input shaft (18).

6. Hybrid traction chain according to one of Claims 1 to 5, the second input shaft (20) being assigned to the second sub-transmission (50), the second sub-transmission (50) having at least two gear shifting clutches (C1, C2) for two forward gears, at least one or at least two gear shifting clutches (C1, C2) being configured as a power-shift clutch (C1^{a}).

7. Hybrid traction chain according to one of Claims 1 to 6, the first sub-transmission (40) having a fixed gear which is fixed on the first input shaft (18) for a first forward gear stage (1) and an idler gear which is mounted rotatably on the first input shaft (18) for a third forward gear stage (3), and the second sub-transmission (50) having a fixed gear which is fixed on the second input shaft (20) for a second forward gear stage (2) and a fixed gear which is fixed on the second input shaft (20) for a fourth forward gear stage (4).

## Revendications

1. Groupe motopropulseur hybride (10) pour un véhicule à moteur, avec
- une première unité d'entraînement (12) pour fournir une première puissance d'entraînement (P1) pour entraîner le véhicule à moteur,
- une deuxième unité d'entraînement (14) pour fournir une deuxième puissance d'entraînement (P2) pour entraîner le véhicule à moteur ; et
- un agencement de transmission (16) qui est relié à la première unité d'entraînement (12) et à la deuxième unité d'entraînement (14), l'agencement de transmission (16) comportant une première partie de transmission (40), au moyen de laquelle une première puissance d'entraînement (P1) est apte à être fournie à une sortie de transmission (22) avec au moins deux rapports de transmission différents, et comportant une deuxième partie de transmission (50), au moyen de laquelle une deuxième puissance d'entraînement (P2) est apte à être fournie à la sortie de transmission avec au moins deux rapports de transmission différents ;
- l'agencement de transmission (16) ayant un premier arbre d'entrée (18) et un deuxième arbre d'entrée (20), le premier arbre d'entrée (18) étant relié à la première unité d'entraînement (12) et le deuxième arbre d'entrée (20) étant relié à la deuxième unité d'entraînement (14),
- la première partie de transmission (40) et la deuxième partie de transmission (50) étant aptes à être reliées l'une à l'autre par un embrayage de pontage (BR), et
- la deuxième unité d'entraînement (14) comprenant un moteur électrique (14) qui est relié au deuxième arbre d'entrée (20) par l'intermédiaire d'un jeu avant de pignons d'entraînement (56),
- un ensemble d'embrayage de commutation (42^{VII}) étant agencé de manière coaxiale au premier arbre d'entrée (18) et au deuxième arbre d'entrée (20), qui présente l'embrayage de pontage (BR) et un embrayage de commutation (A1 ; A2) pour un rapport de vitesse (3) de la première partie de transmission (40), le premier arbre d'entrée (18) et le deuxième arbre d'entrée (20) étant alignés coaxialement l'un par rapport à l'autre, le deuxième arbre d'entrée (20) étant agencé en tant qu'un arbre creux autour du premier arbre d'entrée (18), **caractérisé en ce que** le jeu avant de pignons d'entraînement (56) est agencé dans la zone d'une extrémité de l'agencement de transmission (16) qui est axialement opposée à la première unité d'entraînement (12).

2. Groupe motopropulseur hybride selon la revendication 1, dans lequel la deuxième unité d'entraînement (14) est agencée en chevauchement dans la direction axiale avec au moins une section de la deuxième partie de transmission (50).

3. Groupe motopropulseur hybride selon l'une quelconque des revendications 1 à 2, dans lequel le jeu avant de pignons d'entraînement (56) est aligné axialement avec un jeu de pignons commutables (RC1) et est en prise avec le jeu de pignons commutables.

4. Groupe motopropulseur hybride selon l'une quelconque des revendications 1 à 3, dans lequel au moins un autre jeu de pignons commutables (RC2) est agencé dans la direction axiale entre le jeu avant de pignons d'entraînement (56) et la première unité d'entraînement (12).

5. Groupe motopropulseur hybride selon l'une quelconque des revendications 1 à 4, dans lequel la première unité d'entraînement (12) est reliée au premier arbre d'entrée (18) via un embrayage de démarrage (30).

6. Groupe motopropulseur hybride selon l'une quelconque des revendications 1 à 5, dans lequel le deuxième arbre d'entrée (20) est associé à la deuxième partie de transmission (50), la deuxième partie de transmission (50) comprenant au moins deux embrayages de changement de vitesse (C1, C2) pour deux rapports de vitesse avant, au moins un ou au moins deux embrayages de changement de vitesse (C1, C2) étant conçu(s) comme un(des) embrayage(s) accouplable(s) sous charge (C1^{a}).

7. Groupe motopropulseur hybride selon l'une quelconque des revendications 1 à 6, dans lequel la première partie de transmission (40) comprend un pignon fixe fixé au premier arbre d'entrée (18) pour un premier rapport de vitesse avant (1) et un pignon libre monté de manière rotative sur le premier arbre d'entrée (18) pour un troisième rapport de vitesse avant (3), et dans lequel la deuxième partie de transmission (50) comprend un pignon fixe fixé au deuxième arbre d'entrée (20) pour un deuxième rapport de vitesse avant (2) et un pignon fixe fixé au deuxième arbre d'entrée (20) pour un quatrième rapport de vitesse avant (4).
